Europäisches Patentamt

European Patent Office

Office européen des brevets

(11) Publication number: **0 388 240**
**A1**

## (12) EUROPEAN PATENT APPLICATION

(21) Application number: **90302899.1**

(22) Date of filing: **16.03.90**

(51) Int. Cl.⁵: **H01B 17/50, C03C 17/30**

(30) Priority: **17.03.89 JP 67135/89**

(43) Date of publication of application:
**19.09.90 Bulletin 90/38**

(84) Designated Contracting States:
**BE DE FR GB IT SE**

(71) Applicant: **NGK INSULATORS, LTD.**
**2-56, Suda-cho, Mizuho-ku**
**Nagoya City Aichi Pref.(JP)**

(72) Inventor: **Nakajima, Isao**
**3-16-509 Meiko 2-chome, Minato-ku**
**Nagoya City, Aichi Pref.(JP)**
Inventor: **Ikami, Toshiichi**
**9-1 Aza-Minamino , Ohaza-Kusai**
**Konan City, Aichi Pref.(JP)**

(74) Representative: **Paget, Hugh Charles Edward**
**et al**
**MEWBURN ELLIS 2 Cursitor Street**
**London EC4A 1BQ(GB)**

(54) **Insulator.**

(57) An insulator includes an insulator body which is made of insulating material and has a glassy surface. The glassy surface is treated with silane or silazane to modify it to a glassy surface having the water repellency.

*FIG.1a*

*FIG.1b*

## INSULATOR

The present invention relates to an insulator having excellent water repellency and electrical properties.

It is known that when the surface of the insulator is contaminated, the insulating property thereof is reduced and as a result there are problems caused by occurrence of corona noise and a problem of arcing. Moreover, contaminant on the insulator surface is promoted by adhering of rainwater including dusts and/or absorbing of dusts and gas composition included in the atmosphere when the insulator surface is wetted with rainwater.

Hitherto, it has been tried to apply silicone compound or fluororesin having excellent water repellency on the insulating surface of the insulators to provide a coating having water repellency in order to prevent contaminants from adhering on the insulator surface. Such a coating of silicone compound having excellent water repellency however loses water repellency in a short duration so that recoating is frequently required and maintenance is troublesome. Also, fluororesin having excellent water repellency such as polyfluoroethylene requires complicated steps of coating on the insulator surface, so that work on a pylon is difficult and further lacks practicality since it is difficult to provide a coating of sufficient thickness.

It is an object of the present invention to overcome the aforementioned problems, and to provide an insulator having high practicality and excellent water repellency which can be maintained over a long duration and be easily treated.

In order to solve the problems, the inventors conducted various experiments and studies and found that the prior art has the aim to apply a coating having water repellency on the insulator surface and such a water repellency of the coating is lost in a short duration, but if a glass layer itself forming the surface of the insulator has the water repellency, the water repellency of the insulator surface is not lost.

The present invention is based on such a recognition and is characterized by that the glassy surface of the insulator body is surface treated with silane or silazane.

The conventional porcelain insulator has a glassy glaze applied on the surface of an insulating body of porcelain and the conventional glass insulator has an insulating body of glass, either of which has a glassy surface on which the soil occurs. Thus, according to the present invention, the glassy surface is surface treated with silane or silazane to provide a surface layer of the water repellency.

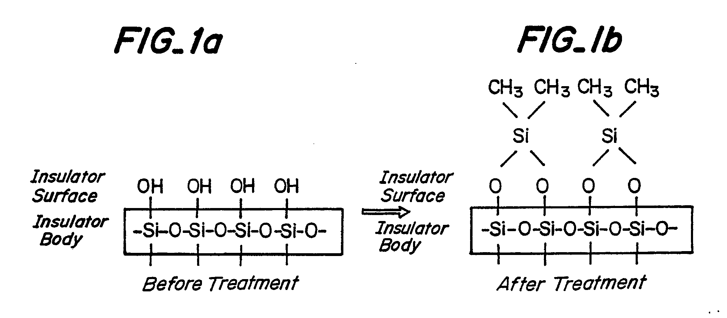

Figs. 1a and 1b show a chemical reaction.

The silane used in the present invention may be a silanyl compound e.g. a silicone monomer which is expressed by a general formula of $R_{4-n}$-Si-$X_n$. In this formula, R is preferably lower hydrocarbon ($C_{1-4}$) or aromatic, substituted or unsubstituted, e.g. -$CH_3$, -$C_6H_5$, -$C_2H_5$ or the like, and X is for example -Cl, -$OCH_3$, -$OC_2H_5$ or the like. The silizane contains -NH- between two Si which may have R groups as above and has the same properties as those of the silane. Either of silane and silazane chemically reacts with silanoyl group (-$\overset{|}{\underset{|}{S}}$ i-OH) to change the glass surface into a glass having the water repellency, which has R portion on the surface as shown in Fig. 1b. Thus in general, the linkage -O-Si-R is present. Particularly, -$CH_3$ - (methyl group) shown in Fig. 1b has a very small critical surface tension and therefore a large water repellency. If silane having the methyl group, such as dimethyldichlorosilane, dimethyldimethoxysilane or the like is used, much preferable result can be obtained.

The insulator surface may be preferably treated in such a manner that the insulator is immersed in bath of silane or silazane. But the insulator surface may be coated with silane or silazane in other manner. When chlorosilane such as dimethyldichlorosilane, trimethylchlorosilane or the like is used, the insulator surface may be treated at room temperature, but when alkoxysilane such as dimethyldimethoxysilane, trimethylmethoxysilane or silazane is used, heating in a range of 100~300°C is required during reaction. However, chlorosilane is difficult to handle, therefore in view of practical use it is preferable to use alkoxysilane or silazane.

The insulator which surface treated with silane or silazane as mentioned above is indistinguishable from an untreated insulator in the external appearance, but when the surface of the treated insulator is analyzed by means of FT-IR (Fourier Transform infrared spectrophotometer), an absorption showing Si-CH appears in a position of 1,250 cm$^{-1}$. Thus, it is confirmed that the insulator surface has been treated with silane. Such a surface treated insulator differs from the conventional insulator having a surface covered with a coating having the water repellency such that the water repellency of the insulator surface is stably maintained for very long duration since the glass itself of the insulator surface has been changed to a water repellent glass and prevents rainwater and the like contaminating matters from adhering on the insulator surface. Accordingly, the insulator according to the present invention is hardly contaminated over long use duration without any maintenance for maintaining the water repellency and consequently can be prevent occurring of corona noise or the like caused by the contaminant on the insulator surface. It should be noted that the

2

present invention is widely applicable for various porcelain and glass insulators such as suspension insulators, pin insulators, hollow insulators, supporting insulators and long rod insulators.

## Example 1

Test pieces similar to the insulator surface were prepared by applying glaze for insulator with 0.3 mm thickness on the surface of plate of 30×30×5 mm which is made of the same material as that of the porcelain of insulator. These pieces were cleaned by immersing in 2N-NaOH aqueous solution for thirty minutes, after drying treated with various silanes and silazane by means of a spray gun, and then heat treated for one hour at 180°C. The heat treated surfaces of the test pieces were washed with aqueous soap solution to remove the excess silane and silazane and then flashed with large volume of city water to remove completely the part of soap. Each of test pieces is inclined at an angle of 30° with respect to the horizontal and the city water is dropped on the surface treated with silane or silazane. The water repellency of the treated surface was evaluated by observing the condition of the dropped water on the treated surface by eye.

The results of the tests are shown in Table 1.

In Table 1, "×" mark is the surface having no water repellency, "○" mark is the surface holding some water drops for short time but is not wetted with the water drops, and "◎" mark is the surface having water repellency so that the water drops are simultaneously slipped down on the inclined surface and the surface is not wetted at all.

It will be confirmed from the Table 1 that the insulator having a surface treated with silane or silazane according to the present invention has more excellent water repellency than that of the conventional insulator having a surface which is not surface treated.

Table 1

| Chemical name | Water repellency |
|---|---|
| Dimethyldimethoxysilane | ◎ |
| Phenyltrichlorosilane | ○ |
| Dimethyldiethoxysilane | ◎ |
| Diphenyldiethoxysilane | ○ |
| Isobutyltrimethoxysilane | ○ |
| Hexamethyldisilazane | ◎ |
| Vinyltrichlorosilane | ○ |
| Vinyltrimethoxysilane | ○ |
| γ-Methacryloxypropyltrimethoxysilane | ○ |
| γ-Glycidoxypropylmethyldiethoxysilane | ○ |
| γ-Aminopropyltriethoxysilane | ○ |
| γ-Mercaptopropyltrimethoxysilane | ○ |
| Not treated | × |

## Example 2

A porcelain suspension insulator which is applied with glassy glaze on the surface thereof was immersed in a bath of dimethyldimethoxysilane for thirty seconds and after drying by taking out the immersing bath, surface treated by heating for sixty minutes at 180°C in a constant temperature bath.

EP 0 388 240 A1

While another same conventional porcelain suspension insulator which is not surface treated was prepared. These two kinds of insulators, i.e. the surface treated insulator and the conventional non surface treated insulator are tested by corona noise tests in dry and wet conditions after an initial condition and twelve months outdoor exposure tests. The corona noise tests was based on the NEMA standard and carried in a manner that noise level of corona noise generated on the insulator surface is measured as applied voltage is progressively increased.

As a result of the above tests, in dry condition, both the surface treated insulator according to the present invention and the conventional non surface treated insulator exhibited good results of a noise level lower than 60 dB when voltage of 30 kV was applied. But, in wet condition, the conventional non treated insulator exhibited a noise level of 75 dB for the insulator of initial condition and a noise level of 90 dB for the insulator after the twelve months outdoor exposure test when voltage of 30 kV was applied. While the surface treated insulator according to the present invention exhibited good results of noise level lower than 60 dB even at wet condition. The good results is not changed for the insulator of initial condition before outdoor exposure test as well as for the insulator after twelve months outdoor exposure test. It will be seen from the above, the surface treated insulator treated with silane or silazane according to the present invention is hardly contaminated on the surface thereof and exhibits a stable corona noise over long duration.

## Claims

1. An insulator comprising an insulator body which is made of insulating material and has a glassy surface treated with silane or silazane.

2. An insulator claimed in claim 1, wherein silane is a silicone monomer which is expressed by a general formula $R_{4-n}$-Si-$X_n$, R being -$CH_3$, -$C_6H_5$, -$C_2H_5$ and X being -$C\ell$, -$OCH_3$, -$OC_2H_5$.

3. A method of treating an insulator having a glassy surface to increase its water repellency comprising treating said surface with a silane or a silazane.

4. An insulator having a glassy surface wherein silanoyl groups at said glassy surface have water-repellent radicals bonded to them.

5. An insulator having a glassy surface having an IR spectrum characteristic of Si-CH bonding.

4

## FIG. 1a

Insulator Surface    OH    OH    OH    OH

Insulator Body    -Si-O-Si-O-Si-O-Si-O-

Before Treatment

$\Longrightarrow$

## FIG. 1b

$CH_3$  $CH_3$  $CH_3$  $CH_3$

Si        Si

O    O    O    O

Insulator Surface

Insulator Body    -Si-O-Si-O-Si-O-Si-O-

After Treatment

| | DOCUMENTS CONSIDERED TO BE RELEVANT | | EP 90302899.1 |
|---|---|---|---|

| Category | Citation of document with indication, where appropriate, of relevant passages | Relevant to claim | CLASSIFICATION OF THE APPLICATION (Int. Cl⁵) |
|---|---|---|---|
| X | <u>US - A - 2 306 222</u><br>(PATNODE)<br> * Page 1, left hand column, lines 33-40; column 1, right hand column, lines 25-29; page 2, left hand column, line 75 - right hand column, line 8 * | 1-5 | H 01 B 17/50<br>C 03 C 17/30 |
| X | <u>DE - A1 - 1 814 498</u><br>(RUHRTAL)<br> * Page 2, line 17 - page 3, line 10 * | 1-5 | |

TECHNICAL FIELDS
SEARCHED (Int Cl⁵)

H 01 B
C 03 C 17/00

The present search report has been drawn up for all claims

| Place of search | Date of completion of the search | Examiner |
|---|---|---|
| VIENNA | 13-06-1990 | KUTZELNIGG |